# EUROPÄISCHE PATENTSCHRIFT

(11) **EP 2 964 397 B1**
(45) Veröffentlichungstag und Bekanntmachung des Hinweises auf die Patenterteilung: **01.05.2019**
(21) Anmeldenummer: 14714925.6
(22) Anmeldetag: 01.03.2014
(51) Int. Cl.: C09C 3/00, C09C 3/04, C09C 1/36, B02C 19/06, C09D 11/037

(54) **VORRICHTUNG UND VERFAHREN ZUR HERSTELLUNG VON TINTE, DIE PARTIKEL ENTHÄLT**
DEVICE AND PROCESS FOR THE PREPARATION OF AN INK WHICH COMPRISES PARTICLES
DISPOSITIF ET PROCÉDÉ POUR LA PRÉPARATION D'ENCRE CONTENANT DES PARTICULES

(30) Priorität: 06.03.2013 DE 102013102244
(43) Veröffentlichungstag der Anmeldung: 13.01.2016
(73) Patentinhaber: NETZSCH-Feinmahltechnik GmbH, 95100 Selb (DE)
(72) Erfinder: ENDERLE, Udo, 95659 Arzberg (DE); REQUENA CASTRO, Santiago, E-08226 Terrassa (ES)
(86) Internationale Anmeldenummer: PCT/DE2014/000102
(87) Internationale Veröffentlichungsnummer: WO 2014/135149

(56) Entgegenhaltungen:
- EP-A2- 2 060 313
- WO-A1-2012/116878
- US-A- 4 165 239
- US-A1- 2006 032 953
- US-A1- 2011 249 056

## Beschreibung

Die vorliegende Erfindung betrifft eine Vorrichtung zur Herstellung von Tinte für eine Bedruckung von Objekten wie Keramik, Glas oder dergleichen.

Keramische Tinten erlangen heute immer größere Bedeutung. Beispielsweise dienen diese zum Zwecke der Dekoration bei keramischen Fliesen und können in Bädern oder weiteren Räumen von Gebäuden Verwendung finden.

Bei aus dem Stand der Technik bekannten Verfahren wurden derartige Fliesen vorgebrannt, anschließend mit Motiven bemalt und in einem abschließenden Schritt einem weiteren Brennvorgang zugeführt. Da derartige Verfahren mit einem großen Aufwand und hoher Zeiterfordernis verbunden sind, kennt der Stand weitere Möglichkeiten, bei welchen fertige Fliesen oder keramische Werkplatten im sogenannten "Drop on Demand" Verfahren mit Druckern bedruckt werden. Die Drucker funktionieren hierbei ähnlich wie Tintenstrahldrucker im Büro. Die hierbei verwendete keramische Tinte ist hitzebeständig und kennt eine große Stabilität gegen Verfärbungen. Die keramische Tinte kann zusätzlich mit dem jeweiligen bedruckten Material, beispielsweise Glas oder Keramik, verschmolzen werden.

In der Praxis hat sich jedoch gezeigt, dass bei Lagerung von aus dem Stand der Technik bekannter Tinte nach bestimmter Zeit eine Sedimentation der Feststoffbestandteile auftritt. Wünschenswert sind daher Tinten, welche länger gelagert werden können, ohne dass eine derartige Sedimentation auftritt.

Aufgabe der Erfindung ist daher eine Vorrichtung und ein Verfahren zur Verfügung zu stellen, mittels welchen die Herstellung von Tinte mit erhöhter Lagerstabilität erfolgen kann. Zudem soll die Vorrichtung unkompliziert ausgestaltet sein und das Verfahren einfach und in optimaler Weise umgesetzt werden können.

Die Aufgabe der Erfindung wird durch eine Vorrichtung und ein Verfahren gelöst, welche die Merkmale in den Schutzansprüchen 1 und 10 umfassen. Weitere vorteilhafte Ausgestaltungen werden durch die Unteransprüche beschrieben.

Die Erfindung betrifft ein Verfahren und eine Vorrichtung zur Herstellung von Tinte für eine Bedruckung von Objekten wie Keramik, Glas oder dergleichen. Die Vorrichtung weist eine erste Einheit und eine der ersten Einheit nachgeordnete zweite Einheit auf.

Beispielsweise kann die Tinte verwendet werden zur Bedruckung von keramischen Fliesen oder Fensterscheiben aus Glas.

In einer bevorzugten Ausführungsform der vorliegenden Erfindung kann die Vorrichtung mit erster Einheit und zweiter Einheit stationär ausgebildet sein. Der Terminus "stationär" ist in diesem Zusammenhang derart zu verstehen, dass die erste Einheit und die zweite Einheit als zusammenwirkendes System ausgebildet und an einem Standort, wie beispielsweise in einer Halle, einem Gebäude oder dergleichen, angeordnet sind.

Erfindungsgemäß besitzt die erste Einheit wenigstens eine Zerkleinerungseinrichtung zur Bildung von Rohmaterial aus einem vorzugsweise anorganischen Ausgangsstoff. Beispielsweise kann der anorganische Ausgangsstoff vollständig oder teilweise durch Eisen, Chrom, Kupfer, Kobalt, Mangan, Antimon, Titan, Zirkon, Zinn und/oder Vanadium, deren Oxide oder sonstigen chemischen Verbindungen, ausgebildet sein. Weitere Stoffe sind dem angesprochenen Fachmann bekannt und werden aus diesem Grunde nicht gesamthaft erwähnt.

Die Zerkleinerungseinrichtung kann beispielsweise eine mechanische Zerkleinerungseinrichtung umfassen, welche durch Brechen und/oder Mahlen auf den vorzugsweise anorganischen Ausgangsstoff derart einwirkt, dass die mittlere Korngröße im Rohmaterial vermindert zur mittleren Korngröße des vorzugsweise anorganischen Ausgangsstoff ausgebildet ist. Vorstellbar ist hierbei, dass nach einer Bearbeitung des vorzugsweise anorganischen Ausgangsstoffes durch die Zerkleinerungseinrichtung das resultierende Rohmaterial in Pulverform beziehungsweise als Agglomerat vorliegt.

Weiter ist vorgesehen, dass die vorherig erwähnte zweite Einheit wenigstens eine Dispergiereinrichtung zur Bildung der Tinte aus dem Rohmaterial und einem fluiden Trägermedium besitzt. Beispielsweise kann das fluide Trägermedium durch Wasser und Löse- und/oder Bindemittel ausgebildet sein. Eine derartige Dispergiereinrichtung setzt sich zusammen aus einer Benetzungseinrichtung sowie einer Zerkleinerungseinrichtung. Vorstellbar ist beispielsweise, dass in der Benetzungseinrichtung das Rohmaterial in ein oder in mehreren Schritten mit dem fluiden Trägermedium benetzt wird. Auch kann es sein, dass nach Benetzung das Trägermedium zusammen mit dem Rohmaterial erst nach einer vordefinierten Verweildauer der nachfolgenden weiteren Zerkleinerungseinrichtung zugeführt wird. Denkbar ist zudem, dass die weitere Zerkleinerungseinrichtung als Rührwerkskugelmühle ausgebildet ist. Beispielsweise können Mahlkugeln der Rührwerkskugelmühle als gängige und handelsübliche Mahlkugeln ausgebildet sein und hierbei einen Durchmesser besitzen, welcher zwischen 0,3 mm und 0,4 mm festgesetzt ist. Weiter Mahlkugeln, welche in diversen Ausführungsformen alternativ oder ergänzend Verwendung finden können, besitzen einen Durchmesser zwischen 0,2 mm und 0,3 mm.

In einer bevorzugten Ausführungsform der vorliegenden Erfindung kann es sein, dass die erste Einheit wenigstens eine Brenneinrichtung zur definierten Temperaturbeaufschlagung des vorzugsweise anorganischen Ausgangsstoffes und/oder des Rohmaterials aufweist. Beispielsweise kann über die Brenneinrichtung eine Temperaturbeaufschlagung des vorzugsweise anorganischen Ausgangsstoffes vor einer Weitergabe an die Zerkleinerungseinrichtung der ersten Einheit erfolgen.

Erfindungsgemäß umfasst die wenigstens eine Zerkleinerungseinrichtung der ersten Einheit eine Strahlmühle zur Bildung des Rohmaterials unter Bearbeitung des Ausgangsstoffes über einen fluiden, insbesondere einen gasförmigen, Zerteilungsstrahl. Wie vorhergehend erwähnt, kann der Ausgangsstoff auch zunächst mechanisch zerkleinert werden. Beispielsweise kann eine mechanische Vorzerkleinerung des Ausgangsstoffes erfolgen und eine nachfolgende weitere Zerkleinerung des Ausgangsstoffes mittels der Strahlmühle vorgesehen sein. Erfahrungsgemäß ist der bei Zerkleinerung des Ausgangsstoffes mittels einer Strahlmühle resultierende d₉₉ Wert des Rohmaterials stark vermindert ausgebildet im Vergleich zu aus dem Stand der Technik bekannten mechanischen Zerkleinerungsprozessen. Durch eine derartige Zerkleinerung mittels einer Strahlmühle kann der Aufwand der nachfolgenden weiteren Zerkleinerung in der Dispergiereinrichtung stark reduziert werden. Weiter resultiert aus dem geringeren d₉₉ Wert eine erhöhte Lagerstabilität der mittels der erfindungsgemäßen Vorrichtung beziehungsweise des nachfolgenden noch näher beschriebenen Verfahrens herstellbaren Tinte. Über die erfindungsgemäße Zerkleinerung mittels der Strahlmühle, gegebenenfalls mit integriertem dynamischen Sichterrad, kann das Rohmaterial in der Tinte nach einer Nassmahlung beziehungsweise dem Dispergieren einen d₉₉ Wert aufweisen, welcher kleiner als 0,4 µm ausgebildet ist. Erfahrungsgemäß hat sich gezeigt, dass das Rohmaterial im zweiten Bearbeitungsprozess mittels einer Rührwerkskugelmühle auf eine Endfeinheit von d₉₉ < 1,0 µm und d₅₀ von 200 bis 400 nm vermahlen werden kann. Zur Verdeutlichung sei darauf hingewiesen, dass der Terminus "fluid" im Zusammenhang mit der vorliegenden Erfindung auch Ausführungsformen umfasst, bei welchen der Zerteilungsstrahl nur teilweise durch Medien im gasförmigen Zustand ausgebildet ist. Somit haben sich insbesondere Ausführungsformen bewährt, bei welchen der Zerteilungsstrahl als überhitzter Heißdampfstrahl ausgebildet ist, welcher vorzugsweise eine Temperatur von mehr als 200°C und insbesondere eine Temperatur von mehr als 300°C besitzt. Aufgrund der hohen Temperatur des Heißdampfstrahls erfolgt bei dieser Ausführungsform keine Beaufschlagung des Ausgangsstoffes beziehungsweise des resultierenden Rohmaterials mit Feuchtigkeit. Ist der gasförmige Zerteilungsstrahl als Heißdampfstrahl ausgebildet, hat sich in der Praxis gezeigt, dass der d₉₉ Wert kleiner als 0,65 µm ausgebildet sein kann. Korngrößen des Festsoffes in der endvermahlenen Tinte, welche 1 µm überschreiten, sind unter Zuhilfenahme eines Heißdampfstrahls nicht oder stark reduziert vorzufinden, so dass mittels der Verwendung eines Heißdampfstrahls eine weitere Erhöhung der Lagerstabilität erreicht werden kann. Auch hat sich gezeigt, dass bei Zerkleinerung mittels einer Strahlmühle und als Heißdampfstrahl ausgebildetem gasförmigem Zerteilungsstrahl die Tinte eine höhere Farbstärke aufweist.

Zudem ist es vorstellbar, dass der Strahlmühle eine mechanische Trenneinrichtung nach Korngröße und insbesondere ein Sichterrad zugeordnet ist. Mittels Trennung durch das Sichterrades kann Feingut als Rohmaterial dem zweiten Bearbeitungsprozess zugeführt werden, während Grobgut, welches eine vordefinierte Korngröße überschreitet, weiter mittels des fluiden Zerteilungsstrahls bearbeitet wird.

Wie vorstehend bereits genannt ist vorstellbar, dass der Strahlmühle eine weitere mechanische Zerkleinerungseinrichtung für den vorzugsweise anorganischen Ausgangsstoff vorgeordnet ist. Die weitere mechanische Zerkleinerungseinrichtung kann hierbei beispielweise durch eine Brech- und/oder Mahleinrichtung ausgebildet sein.

Zudem kann die erste Einheit eine der Zerkleinerungseinrichtung vorgeordnete Rühr- und/oder Mischeinrichtung für den vorzugsweise anorganischen Ausgangsstoff umfassen. Beispielsweise kann die Mischeinrichtung hierzu über geeignete Rühr-und/oder Knetwerkzeuge verfügen.

Weiter kann es sein, dass die zweite Einheit eine der Dispergiereinrichtung nachgeordnete Fülleinrichtung zur Abgabe der Tinte an ein oder mehrere Behälter oder Behältnisse aufweist. Beispielsweise können mehrere Behälter und/oder Behältnisse als Gebinde ausgebildet beziehungsweise zu einem Gebinde zusammengefasst sein.

Die Erfindung betrifft zudem ein Verfahren zur Herstellung von Tinte für eine Bedruckung von Objekten wie Keramik, Glas oder dergleichen, bei welchem Verfahren in einem ersten Bearbeitungsprozess ein vorzugsweise anorganischer Ausgangsstoff einem Zerkleinerungsvorgang mit hieraus resultierendem Rohmaterial unterzogen wird. Weiter wird das Rohmaterial während eines an den ersten Bearbeitungsprozess anschließenden zweiten Bearbeitungsprozesses in einem Dispergierverfahren zur Bildung der Tinte mit einem fluiden Trägermedium benetzt und weiter zerkleinert.

Erfindungsgemäß ist vorgesehen, dass der vorzugsweise anorganische Ausgangsstoff im Zerkleinerungsvorgang durch mindestens einen fluiden und insbesondere als Heißdampfstrahl ausgebildeten Zerteilungsstrahl bearbeitet wird, anschließend definierte Korngrößen mechanisch abgetrennt und als Rohmaterial dem zweiten Bearbeitungsprozess zugeführt werden.

Der zweite Bearbeitungsprozess kann damit sämtliche "feuchten" Verfahrensschritte ab einer Benetzung des Rohmaterials mit dem flüssigen bzw. fluiden Trägermedium umfassen, während der erste Bearbeitungsprozess sämtliche "trockenen" Verfahrensschritte bis zur Benetzung des Rohmaterials mit dem flüssigen bzw. fluiden Trägermedium umfasst.

Auch kann es sein, dass vor Bearbeitung durch den gasförmigen Zerteilungsstrahls eine Zerkleinerung des Ausgangsstoffes, beispielsweise durch Brechen und/oder Mahlen, erfolgt. Der Heißdampfstrahl kann bevorzugt eine Temperatur im Bereich von 350°C aufweisen.

Zudem kann es sein, dass der anorganische Ausgangsstoff und/oder das Rohmaterial gebrannt wird. Beispielsweise kann das Brennen des Ausgangsstoffes vor seiner Zerkleinerung im ersten Bearbeitungsprozess erfolgen.

Auch ist es vorstellbar, dass die Tinte während des zweiten Bearbeitungsprozesses in einem abschließenden Verfahrensschritt in Behälter und/oder Behältnisse abgegeben wird. Mehrere Behälter und/oder Behältnisse können hierbei zu einem Gebinde zusammengefasst sein.

Gegensätzlich zu bereits aus dem Stand der Technik bekannten Verfahren, können beim erfindungsgemäßen Verfahren bzw. mittels der erfindungsgemäßen Vorrichtung sämtliche Schritte, beginnend mit der Bearbeitung des Ausgangsstoffes bei zur Abfüllung der fertigen Tinte, in einem Prozess an einem gemeinsamen Standort erfolgen. Denkbar ist daher, dass der erste Bearbeitungsprozess unmittelbar an den zweiten Bearbeitungsprozess anschließt.

Die mittels des Verfahrens hergestellte Tinte kann zu 30% bis 50% aus keramischen anorganischen Pigmenten bestehen, wobei die weiteren Bestandteile der Tinte als organisches Trägermedium und Dispergiermittel ausgebildet sind. Insbesondere bei Verwendung der vorherig bereits genannten Strahlmühle und nachfolgender weiterer Zerkleinerung kann der d₉₉ Wert des Rohmaterials vor der Strahlmühle zwischen 35 µm und 80 µm und insbesondere zwischen 60 µm und 70 µm und vorzugsweise mit < 65 µm festgesetzt sein. In der Praxis hat sich gezeigt, dass das Rohmaterial mittels der Strahlmühle speziell mittels einer Dampfstrahlmühle vor einer nachfolgenden Zerkleinerung auf einen d₉₉ Wert unter 2,2 µm, erfahrungsgemäß zwischen 1,8 µm und 2,2 µm und insbesondere im Bereich von 2,0 µm, zerkleinerbar ist. In weiteren Ausführungsformen, bei welchen für den Zerteilungsstrahl Luft als Medium Verwendung findet, kann der d₉₉ Wert des Rohmaterials vor einer nachfolgenden Zerkleinerung unter 5,00 µm festgesetzt sein. Der d₉₉ Wert des Rohmaterials in der Tinte kann unter 1,0 µm und insbesondere unter 0,4 µm festgesetzt sein.

Zudem ist es vorstellbar, dass der anorganische Ausgangsstoff im Zerkleinerungsvorgang beziehungsweise im Zerkleinerungsvorgang des ersten Bearbeitungsprozesses zusammen mit ein oder mehreren Mahlmitteln zur Verringerung des Energiebedarfs zerkleinernd bearbeitet wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Ausführungsform einer erfindungsgemäßen Vorrichtung zur Herstellung von Tinte;
Figur 2 zeigt einzelne Schritte, wie sie bei einer Ausführungsform eines erfindungsgemäßen Verfahrens Verwendung finden können;
Figuren 3A bis 3C zeigen die Korngrößenverteilung unter Verwendung dreier Ausführungsformen von Strahlmühlen, wie sie jeweils Bestandteil einer erfindungsgemäßen Vorrichtung beziehungsweise eines erfindungsgemäßen Verfahrens sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

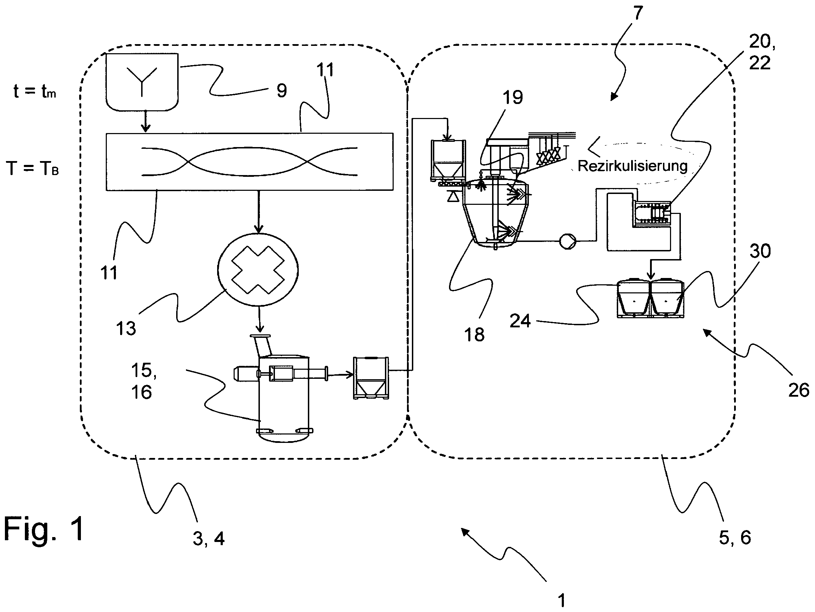

**Figur 1** zeigt eine schematische Ansicht einer Ausführungsform einer Vorrichtung 1 zur Herstellung von Tinte 30. Die Vorrichtung 1 ist vorzugsweise stationär ausgebildet und besitzt eine erste Einheit 3, über welche bei Zerkleinerung und Bearbeitung aus einem Ausgangstoff Rohmaterial gebildet wird und eine zweite Einheit 5, welche wenigstens eine Dispergiereinrichtung 7 zur Bildung von Tinte 30 aus dem Rohmaterial und einem fluiden Trägermedium besitzt. Die erste Einheit 3 und die zweite Einheit 5 befinden sich am selben Standort und sind beide stationär ausgebildet.

Da das Rohmaterial bzw. der Ausgangsstoff lediglich bei Bearbeitung durch die zweite Einheit 5 zusammen mit dem fluiden Trägermedium eine flüssige Gesamtzusammensetzung bildet, kann die erste Einheit 3 als Trockenanlage 4 bezeichnet werden, während die zweite Einheit 5 als Nassanlage 6 bezeichnet werden kann.

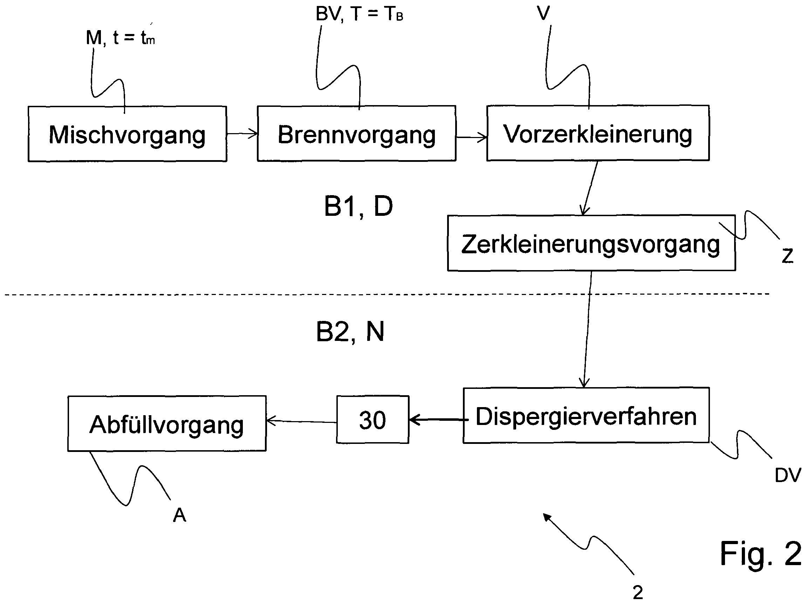

Unter Verweis mit Bezugsziffer 9 ist in Figur 1 eine Mischeinrichtung der ersten Einheit 3 beziehungsweise der Trockenanalage 4 dargestellt, über welche der anorganische Ausgangsstoff zu Beginn einem Mischvorgang M (vgl. Figur 2) unterzogen wird. Der anorganische Ausgangsstoff besitzt hierbei eine Temperatur tₘ. Nach vorbestimmter Verweilzeit in der Mischeinrichtung 9 wird der durchmischte Ausgangsstoff an eine Brenneinrichtung 11 weitergegeben, in welcher er getrocknet und mit definierter Temperatur T_{B} beaufschlagt wird. Es gilt: T_{B} > tₘ. Die Brenneinrichtung 11 ist als Bestandteil der ersten Einheit 3 beziehungsweise der Trockenanlage 4 ausgebildet.

Wie in Figur 1 erkennbar, ist der Brenneinrichtung 11 eine erste Zerkleinerungseinrichtung 13 nachgeordnet, welche zum groben Vorzerkleinern des durchmischten und getrockneten Ausgangsstoffes vorgesehen ist. Nach Vorzerkleinern des vorbehandelten Ausgangsstoffes wird dieser einer weiteren Zerkleinerungseinrichtung 15 zugeführt, welche als Strahlmühle 16 ausgebildet ist. Ebenso ist die Strahlmühle 16 Bestandteil der ersten Einheit 3 beziehungsweise der Trockenanlage 5. Sämtliche nachgeordneten Verfahrensschritte beziehungsweise sämtliche nachgeordneten Einrichtungen sind Bestandteil der zweiten Einheit 5 beziehungsweise der Nassanlage 6. Über die Strahlmühle 16 kann eine Zerkleinerung mittels eines Dampfstrahls, vorzugsweise mittels eines Heißdampfstrahls erfolgen. Vorstellbar ist auch, dass zwei oder mehr als zwei Strahlmühlen 16 vorhanden sind, über welche in nachfolgenden Schritten die Zerkleinerung des Ausgangsstoffes erfolgt und wobei zumindest eine der zwei Strahlmühlen 16 zur Zerkleinerung des Ausgangsstoffes mittels eines Heißdampfstrahls ausgebildet ist.

Unmittelbar nach Bearbeitung des Ausgangsstoffes über die zweite Zerkleinerungseinrichtung 15 beziehungsweise die Strahlmühle 16 wird das aus der Zerkleinerung gewonnene Rohmaterial an die Dispergiereinrichtung 7 weitergegeben, welche sich zusammensetzt aus einer Benetzungseinrichtung 18 sowie einer der Benetzungseinrichtung 18 nachgeordneten weiteren Zerkleinerungseinrichtung 20. Die Dispergiereinrichtung 7 beziehungsweise die Benetzungseinrichtung 18 sowie die Zerkleinerungseinrichtung 20 sind Bestandteil der zweiten Einheit 5 bzw. der Nassanlage 6.

Über die Benetzungseinrichtung 18 wird das aus der Bearbeitung durch die Trockenanlage 4 gewonnene Rohmaterial mit fluidem Trägermedium 19 benetzt und anschließend an die weitere Zerkleinerungseinrichtung 20 weitergegeben. Die weitere Zerkleinerungseinrichtung 20 ist ausgebildet als Rührwerkskugelmühle 22. Nach Passieren der weiteren Zerkleinerungseinrichtung 20 ist das Rohmaterial zusammen mit dem fluiden Trägermedium 19 als Tinte 30 ausgebildet.

Je nach erwünschtem Feinheitsgrad des Rohmaterials in der Tinte 30 kann es sein, dass das Rohmaterial zusammen mit dem fluiden Trägermedium 19 die weitere Zerkleinerungseinrichtung 20 bzw. die Rührwerkskugelmühle 22 mehrmals durchläuft. Hierzu kann die weitere Zerkleinerungseinrichtung 20 beziehungsweise die Rührwerkskugelmühle 22 mit einem Zirkulationssystem in Verbindung stehen, welches zur Rückbeförderung und erneuten Zuführung der Tinte an die weitere Zerkleinerungseinrichtung 20 beziehungsweise die Rührwerkskugelmühle 22 ausgebildet ist.

Zur weiteren Verwertung wird die Tinte 30 in einem abschließenden Verfahrensschritt und durch eine Fülleinrichtung (nicht dargestellt) an Behälter 24 abgegeben und portioniert, wobei vorliegend mehrere Behälter 24 zu einem Gebinde 26 zusammengefasst sind.

**Figur 2** zeigt einzelne Verfahrensschritte, wie sie bei einer Ausführungsform des erfindungsgemäßen Verfahrens 2 vorhanden sein können.

So ist als erster Schritt ein Mischvorgang M dargestellt, bei welchem ein anorganischer Ausgangsstoff nach seiner Aufgabe unter Zuhilfenahme von Rührwerkzeugen durchmischt wird. In einem nachfolgenden Schritt wird im Rahmen eines Brennvorgangs BV der Ausgangsstoff gebrannt, wobei Feuchtigkeit aus dem Ausgangsstoff entfernt wird.

Bezugsziffer V verweist auf eine Vorzerkleinerung, wie sie beispielsweise mechanisch und über geeignete Brech- oder Mahlwerkzeuge erfolgen kann. Der nachfolgende Zerkleinerungsvorgang Z ist vorliegend abschließender Verfahrensschritt des ersten Behandlungsprozesses B1 beziehungsweise des Trockenprozesses D. Im Rahmen des Zerkleinerungsvorganges Z kann beispielsweise eine Zerteilung des vorbehandelten Ausgangsstoffes über die in Figur 1 beschriebene Strahlmühle 16 beziehungsweise über einen gasförmigen Zerteilungsstrahl erfolgen.

Sämtliche weiteren Schritte erfolgen im Rahmen des zweiten Behandlungsprozesses B2 beziehungsweise des Nassprozesses N. Unmittelbar nach dem Zerkleinerungsvorgang Z wird das resultierende Rohmaterial einem Dispergierverfahren DV unterzogen, bei welchem Dispergierverfahren DV das Rohmaterial mit einem fluiden Trägermedium benetzt und weiter zerkleinert wird. Hat das Rohmaterial eine vordefinierte Korngröße erreicht, so kann das Dispergierverfahren beendet werden, wobei aus dem Rohmaterial und dem fluiden Trägermedium 19 die Tinte 30 gebildet ist.

Um die Tinte 30 zu den Druckeinrichtungen transportieren zu können, wird vorliegend die Tinte 30 über einen Abfüllvorgang A geeigneten Behältern 24 (vgl. Figur 1) zugeführt.

Unter Berücksichtigung des erfindungsgemäßen Verfahrens 2 beziehungsweise der erfindungsgemäßen stationären Vorrichtung 1, kann die Trockenmahlung beziehungsweise Bearbeitung des anorganischen Ausgangsstoffes vor Dispergierung auf einen d₉₉ Wert zwischen 2,00 µm und 5,00 µm und die hierauf folgende Nassmahlung auf einen d₉₉ Wert von 0,39 µm erfolgen.

Unter Verwendung des erfindungsgemäßen Verfahrens 2 beziehungsweise der erfindungsgemäßen Vorrichtung 1 und unter Zuhilfenahme einer Strahlmühle 16 wird bei Mahlung mit Dampf ein d₉₉ Wert zwischen 1,80 µm und 2,20 µm und insbesondere von 2,00 µm und mittels nachfolgender weiterer Zerkleinerung des anorganischen Ausgangstoffes ein d₉₉ Wert zwischen 50 µm und 80 µm, vorzugsweise zwischen 60 µm und 70 µm und insbesondere von 0,63 µm erreicht. Weiter wurde festgestellt, dass mit diesen erreichbaren Werten die Lagerstabilität und die Druckbarkeit der Tinte stark verbessert wird und somit die Zerkleinerung unter Zuhilfenahme einer Strahlmühle 16 weitere Vorteile bringt. Insbesondere konnte durch eine geänderte Kornverteilung aufgrund der veränderten Mahlbedingungen die Lagerstabilität auf mehrere Monate erhöht werden.

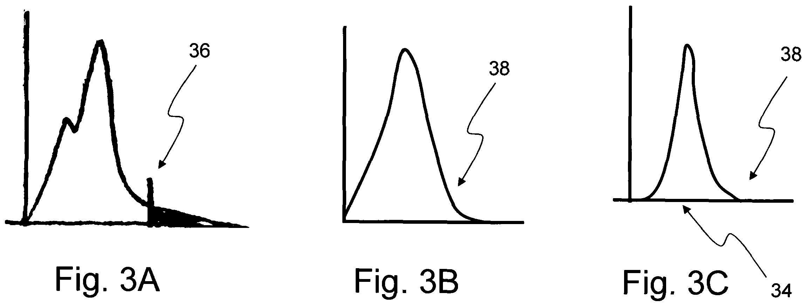

**Figuren 3A bis 3C** zeigen die Korngrößenverteilung unter Verwendung dreier Ausführungsformen von Strahlmühlen 16, wie sie jeweils Bestandteil einer erfindungsgemäßen Vorrichtung 1 beziehungsweise eines erfindungsgemäßen Verfahrens 2 sein können.

Die Korngrößenverteilung der Figur 3A wurde erreicht durch eine Strahlmühle 16, bei welcher das Medium für den Zerteilungsstrahl durch Luft ausgebildet ist. Erkennbar ist ein d₉₇ Wert 36, welcher zwischen 5 µm und 6 µm festgesetzt ist. Dargestellt ist zudem, dass die Korngrößenverteilung der Figur 3A gegenüber den Korngrößenverteilungen der Figuren 3B und 3C inhomogen ausgebildet ist, so dass eine Vielzahl von Korngrößen vorhanden ist, deren Durchmesser weit größer als 6 µm ausgebildet ist. Rechtsseitig des angetragenen d₉₇ Wertes 36 sind die Anteile an Rohmaterial mit größerem Durchmesser als 6 µm erkennbar.

Figur 3B zeigt die Korngrößenverteilung unter Zerkleinerung des Ausgangsstoffes mittels einer verbesserten Strahlmühle 16, bei welcher ebenso das Medium für den Zerteilungsstrahl durch Luft ausgebildet ist. Der angetragene d₉₉ Wert 38 ist in der Praxis bei derartigen verbesserten Strahlmühlen 16 zwischen 3 µm und 5 µm festgesetzt. Vergleichend zur Korngrößenverteilung des Ausführungsbeispiels der Figur 3A ist offensichtlich, dass der Anteil an Rohmaterial mit Korngrößen größer als 5 µm deutlich geringer ausgebildet ist.

Figur 3C zeigt eine Korngrößenverteilung unter Zerkleinerung mittels einer bevorzugt für die erfindungsgemäße Vorrichtung 1 und das erfindungsgemäße Verfahren 2 verwendbaren Strahlmühle 16, bei welcher der Zerteilungsstrahl als Heißdampfstrahl ausgebildet ist. Der in Figur 3C angetragene d₉₉ Wert beträgt bei derartigen Ausführungsformen erfahrungsgemäß zwischen 2 µm und 2,2 µm. Korngrößen, welche vom d₉₉ Wert stark oder um ein Vielfaches nach oben abweichen, sind in der Korngrößenverteilung der Figur 3C gegensätzlich zu den Korngrößenverteilungen der Figuren 3A und 3B nicht oder kaum vorhanden. Da aus einer Korngrößenverteilung, wie sie in Figur 3C mittels eines Heißdampfstrahls erzielt werden kann, eine höhere Lagerstabilität der in weiteren Verfahrensschritten herstellbaren Tinte 30 resultiert, kann ein Heißdampfstrahl in bevorzugten Ausführungsformen der vorliegenden Erfindung Verwendung finden.

Zur Verdeutlichung ist in Figur 3C zusätzlich der d₅₀ Wert 34 angetragen, der sich in etwa durch den Scheitel der im Wesentlichen als Gaußschen Glockenkurve ausgebildeten Korngrößenverteilung erstreckt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 2: Verfahren
- 3: Erste Einheit
- 4: Trockenanlage
- 5: Zweite Einheit
- 6: Nassanlage
- 7: Dispergiereinrichtung
- 9: Mischeinrichtung
- 11: Brenneinrichtung
- 13: Erste Zerkleinerungseinrichtung
- 15: Weitere Zerkleinerungseinrichtung
- 16: Strahlmühle
- 18: Benetzungseinrichtung
- 19: Fluides Trägermedium
- 20: Zerkleinerungseinrichtung
- 22: Rührwerkskugelmühle
- 24: Behälter
- 26: Gebinde
- 30: Tinte
- 34: d₅₀ Wert
- 36: d₉₇ Wert
- 38: d₉₉ Wert

- A: Abfüllvorgang
- B1: Erster Bearbeitungsprozess
- B2: Zweiter Bearbeitungsprozess
- BV: Brennvorgang
- D: Trockenprozess
- DV: Dispergierverfahren
- M: Mischvorgang
- N: Nassvorgang
- T: Temperatur
- t: Temperatur
- T_{B}: Temperatur Brennvorgang
- tₘ: Temperatur Mischvorgang
- V: Vorzerkleinerung
- Z: Zerkleinerungsvorgang

## Patentansprüche

1. Vorrichtung (1) zur Herstellung von Tinte (T) für eine Bedruckung von Objekten wie Keramik, Glas oder dergleichen, wobei die Vorrichtung (1) eine erste Einheit (3) und eine der ersten Einheit (3) nachgeordnete zweite Einheit (5) aufweist, wobei die erste Einheit (3) wenigstens eine Zerkleinerungseinrichtung (13, 15) zur Bildung von Rohmaterial aus einem vorzugsweise anorganischen Ausgangsstoff umfasst und die zweite Einheit (5) wenigstens eine Dispergiereinrichtung (7) zur Bildung der Tinte (30) aus dem Rohmaterial und einem fluiden Trägermedium (19) besitzt, wobei die wenigstens eine Zerkleinerungseinrichtung (13, 15) eine Strahlmühle (16) zur Bildung des Rohmaterials unter Bearbeitung des Ausgangsstoffes über einen fluiden Zerteilungsstrahl umfasst und eine als Bestandteil der Dispergiereinrichtung (7) ausgebildete weitere Zerkleinerungseinrichtung (20) eine Rührwerkskugelmühle (22) ist.

2. Vorrichtung (1) nach Anspruch 1, bei welcher der Zerteilungsstrahl der Strahlmühle (16) als Heißdampfstrahl ausgebildet ist, welcher vorzugsweise eine Temperatur von mehr als 200°C und insbesondere eine Temperatur von mehr als 300°C besitzt.

3. Vorrichtung (1) nach Anspruch 1 oder 2, bei welcher der Strahlmühle (16) eine mechanische Trenneinrichtung nach Korngröße und insbesondere ein Sichterrad zugeordnet ist.

4. Vorrichtung (1) nach einem der voranstehenden Ansprüche 1 bis 3, wobei die 20 Vorrichtung (1) mit erster Einheit (3) und zweiter Einheit (5) stationär ausgebildet ist.

5. Vorrichtung (1) nach einem oder mehreren der voranstehenden Ansprüche, bei welcher die erste Einheit (3) wenigstens eine Brenneinrichtung (11) zur definierten Temperaturbeaufschlagung des vorzugsweise anorganischen Ausgangsstoffes und/oder des Rohmaterials aufweist.

6. Vorrichtung (1) nach einem oder mehreren der Ansprüche 1 bis 5, bei welcher die erste Einheit (3) eine der wenigstens einen Zerkleinerungseinrichtung (13, 15) vorgeordnete Rühr- und/oder Mischeinrichtung (9) für den vorzugsweise anorganischen Ausgangsstoff umfasst.

7. Vorrichtung (1) nach Anspruch nach einem oder mehreren der voranstehenden Ansprüche 1 bis 6, bei welcher die Mahlkugeln der Rührwerkskugelmühle (22) durch Zirkonoxid ausgebildet sind und überwiegend eine Korngröße zwischen 0,3 µm und 0,5 µm aufweisen.

8. Vorrichtung (1) nach einem oder mehreren der Ansprüche 1 bis 7, bei welcher die zweite Einheit (5) eine der Dispergiereinrichtung (7) nachgeordnete Fülleinrichtung zur Abgabe der Tinte (30) an ein oder mehrere Behälter (24) und/oder Behältnisse aufweist.

9. Verfahren (2) zur Herstellung von Tinte (30) für eine Bedruckung von Objekten wie Keramik, Glas oder dergleichen, bei welchem Verfahren (2) in einem ersten Bearbeitungsprozess (B1) ein vorzugsweise anorganischer Ausgangsstoff einem Zerkleinerungsvorgang (V, Z) mit hieraus resultierendem Rohmaterial unterzogen wird, welches Rohmaterial während eines an den ersten Bearbeitungsprozess (B1) anschließenden zweiten Bearbeitungsprozesses (B2) in einem Dispergierverfahren (DV) zur Bildung der Tinte (30) mit einem fluiden Trägermedium (19) benetzt und mittels einer Rührwerkskugelmühle (22) weiter zerkleinert wird, wobei der vorzugsweise anorganische Ausgangsstoff im Zerkleinerungsvorgang (Z) durch mindestens einen fluiden und insbesondere als Heißdampfstrahl ausgebildeten Zerteilungsstrahl bearbeitet wird, anschließend definierte Korngrößen mechanisch abgetrennt und als Rohmaterial dem zweiten Bearbeitungsprozess (B2) zugeführt werden.

10. Verfahren (2) nach Anspruch 9, bei welcher der zweite Bearbeitungsprozess (B2) unmittelbar an den ersten Bearbeitungsprozess (B1) anschließt.

11. Verfahren (2) nach Anspruch 9 oder 10, bei welchem der vorzugsweise anorganische Ausgangsstoff während des ersten Bearbeitungsprozesses (B1) zunächst auf einen d₉₉ Wert (38) unter 5,00 µm und vorzugsweise auf einen d₉₉ Wert (38), welcher zwischen 1,80 µm und 2,20 µm festgesetzt ist, zerkleinert wird.

12. Verfahren (2) nach einem der Ansprüche 9, 10 oder 11, bei welchem das Rohmaterial im zweiten Bearbeitungsprozess (B2) mechanisch und vorzugsweise mittels einer Rührwerkskugelmühle auf eine Endfeinheit von d₉₉ < 1,0 µm und d₅₀ von 200 bis 400 nm vermahlen wird.

13. Verfahren (2) nach einem oder mehreren der Ansprüche 9 bis 12, bei welchem die Tinte (30) während des zweiten Bearbeitungsprozesses (B2) in einem abschließenden Verfahrensschritt in Behälter (24) und/oder Behältnisse abgegeben wird.

14. Verfahren nach einem oder mehreren der Ansprüche 9 bis 13, bei welcher der anorganische Ausgangsstoff im Zerkleinerungsvorgang (Z) zusammen mit ein oder mehreren Mahlmitteln zur Verringerung des Energiebedarfs zerkleinernd bearbeitet wird.

## Claims

1. A device (1) for producing ink (T) for an imprinting of objects, such as ceramics, glass or the like, wherein the device (1) has a first unit (3) and a second unit (5) arranged downstream of the first unit (3), wherein the first unit (3) comprises at least one comminution device (13, 15) for forming raw material from a preferably inorganic starting material, and the second unit (5) has at least one dispersion device (7) for forming the ink (30) from the raw material and a fluid carrier medium (19), wherein the at least one comminution device (13, 15) comprises a jet mill (16) for forming the raw material by processing the starting material via a fluid comminution jet, and a further comminution device (20), which is embodied as part of the dispersion device (7), is an agitator ball mill (22).

2. The device (1) according to claim 1, in which the comminution jet of the jet mill (16) is embodied as hot steam jet, which preferably has a temperature of more than 200°C and in particular a temperature of more than 300°C.

3. The device (1) according to claim 1 or 2, in which a mechanical separating device according to grain size and in particular a separator wheel is assigned to the jet mill (16).

4. The device (1) according to one of the preceding claims 1 to 3, wherein the device (1) with first unit (3) and second unit (5) is embodied in a stationary manner.

5. The device (1) according to one or a plurality of the preceding claims, in which the first unit (3) has at least one combustor (11) for the defined temperature application of the preferably inorganic starting material and/or of the raw material.

6. The device (1) according to one or a plurality of claims 1 to 5, in which the first unit (3) comprises a stirrer and/or mixer (9) arranged upstream of the at least one comminution device (13, 15), for the preferably inorganic starting material.

7. The device (1) according to claim according to one or a plurality of the preceding claims 1 to 6, in which the grinding balls or the agitator ball mill (22) are embodied by zirconium oxide and predominantly have a grain size of between 0.3 µm and 0.5 µm.

8. The device (1) according to one or a plurality of claims 1 to 7, in which the second unit (5) has a filling device arranged downstream of the dispersion device (7) for delivering the ink (30) to one or a plurality of containers (24) and/or receptacles.

9. A method (2) for producing ink (30) for an imprinting of objects, such as ceramics, glass or the like, in which method (2) a preferably inorganic starting material is subjected to a comminution process (V, Z) with raw material resulting therefrom in a first processing process (B1), which raw material is wetted with a fluid carrier medium (19) and is further comminuted by means of an agitator bead mill (22) during a second processing process (B2) following the first processing process (B1) in a dispersion method (DV) for forming the ink (30), wherein the preferably inorganic starting material is processed in the comminution process (Z) by means of at least one fluid comminution jet, which is in particular embodied as hot steam jet, defined grain sizes are mechanically separated afterwards and are delivered as raw material to the second processing process (B2).

10. The method (2) according to claim 9, in which the second processing process (B2) immediately follows the first processing process (B1).

11. The method (2) according to claim 9 or 10, in which the preferably inorganic starting material is initially comminuted to a d₉₉ value (38) of below 5.00 µm and preferably to a d₉₉ value (38), which is set to between 1.80 µm and 2.20 µm, during the first processing process (B1).

12. The method (2) according to one of claims 9, 10 or 11, in which the raw material is mechanically ground and preferably by means of an agitator bead mill to a final fineness of d₉₉ < 1.0 µm and d₅₀ of 200 to 400 mm.

13. The method (2) according to one or a plurality of claims 9 to 12, in which the ink (30) is delivered into containers (24) and/or receptacles during the second processing process (B2) in a final method step.

14. The method according to one or a plurality of claims 9 to 13, in which the inorganic starting material is processed in a comminuting manner in the comminuting process (Z), together with one or a plurality of grinding means in order to reduce the energy demand.

## Revendications

1. Dispositif (1) pour la fabrication d'encre (T) pour une impression sur des objets tels que de la céramique, du verre ou similaires, le dispositif (1) comportant une première unité (3) et une deuxième unité (5) disposée en aval de la première unité (3), dans lequel la première unité (3) comporte au moins un dispositif de broyage (13, 15) pour la formation de matière brute à partir d'un matériau de départ de préférence anorganique et la deuxième unité (5) possède au moins un dispositif de dispersion (7) pour la formation de l'encre (30) à partir de la matière brute et d'un milieu porteur fluide (19), dans lequel l'au moins un dispositif de broyage (13, 15) comporte un pulvérisateur à jet (16) pour la formation de la matière brute par transformation du matériau de départ à l'aide d'un jet de décomposition fluide, et un autre dispositif de broyage (20) conçu comme un composant du dispositif de dispersion (7) est un broyeur agitateur à billes (22).

2. Dispositif (1) selon la revendication 1, dans lequel le jet de décomposition du pulvérisateur à jet (16) est conçu comme un jet de vapeur chaude, lequel présente de préférence une température supérieure à 200°C et en particulier une température supérieure à 300°C.

3. Dispositif (1) selon la revendication 1 ou 2, dans lequel un dispositif de séparation mécanique granulométrique et en particulier une roue séparatrice est attribué(e) au pulvérisateur à jet (16).

4. Dispositif (1) selon l'une des revendications précédentes 1 à 3, dans lequel le dispositif (1) est conçu stationnaire avec la première unité (3) et la deuxième unité (5).

5. Dispositif (1) selon l'une ou plusieurs des revendications précédentes, dans lequel la première unité (3) présente au moins un dispositif de combustion (11) pour appliquer une température définie du matériau de départ de préférence anorganique et/ou de la matière brute.

6. Dispositif (1) selon l'une ou plusieurs des revendications 1 à 5, dans lequel la première unité (3) comporte un dispositif de brassage et/ou de mélange (9) pour le matériau de départ de préférence anorganique, lequel est disposé en amont de l'au moins un dispositif de broyage (13, 15).

7. Dispositif (1) selon l'une ou plusieurs des revendications précédentes 1 à 6, dans lequel les billes de broyage du broyeur agitateur à billes (22) sont constituées d'oxyde de zircone et présentent majoritairement une taille de grain comprise entre 0,3 µm et 0,5 µm.

8. Dispositif (1) selon l'une ou plusieurs des revendications 1 à 7, dans lequel la deuxième unité (5) présente un dispositif de remplissage disposé en aval du dispositif de dispersion (7), pour le dépôt d'encre (30) sur un ou plusieurs récipients (24) et/ou conteneurs.

9. Procédé (2) pour la fabrication d'encre (30) pour l'impression sur des objets tels que la céramique, le verre ou similaires, ledit procédé (2) présentant un premier processus de transformation (B1) dans lequel un matériau de départ de préférence anorganique est soumis à une opération de broyage (V, Z) de laquelle résulte une matière brute, ladite matière brute étant mouillée avec un milieu porteur fluide (19) pour former l'encre (30) à l'aide d'une opération de dispersion (DV) au cours d'un deuxième processus de transformation (B2) consécutif au premier processus de transformation (B1), et broyée davantage au moyen du broyeur agitateur à billes (22), dans lequel le matériau de départ de préférence anorganique est transformé pendant l'opération de broyage (Z) par au moins un jet de décomposition fluide consistant en particulier en un jet de vapeur chaude, puis des tailles de grain définies sont séparées mécaniquement et acheminées en tant que matière brute vers le deuxième processus de transformation (B2).

10. Procédé (2) selon la revendication 9, dans lequel le deuxième processus de transformation (B2) suit immédiatement le premier processus de transformation (B1).

11. Procédé (2) selon la revendication 9 ou 10, dans lequel le matériau de départ de préférence anorganique est broyé pendant le premier processus de transformation (B1) tout d'abord à une valeur d₉₉ (38) inférieure à 5,00 µm et de préférence à une valeur d₉₉ (38) fixée entre 1,80 µm et 2,20 µm.

12. Procédé (2) selon l'une des revendications 9, 10 ou 11, dans lequel la matière brute est moulue mécaniquement dans le deuxième processus de transformation (B2) et de préférence moulue à l'aide d'un broyeur agitateur à billes de manière à obtenir une finesse finale de d₉₉ < 1,0 µm et d₅₀ de 200 à 400 nm.

13. Procédé (2) selon l'une ou plusieurs des revendications 9 à 12, dans lequel l'encre (30) est déposée dans des récipients (24) et/ou des conteneurs au cours du deuxième processus de transformation (B2) dans une étape de procédé finale.

14. Procédé selon l'une ou plusieurs des revendications 9 à 13, dans lequel le matériau de départ anorganique est transformé pendant l'opération de broyage (Z) ensemble avec un ou plusieurs moyens de broyage pour réduire les besoins énergétiques.
